# EUROPEAN PATENT APPLICATION

(11) **EP 4 344 581 A1**
(43) Date of publication of application: **03.04.2024**
(21) Application number: 22199072.4
(22) Date of filing: 30.09.2022
(51) Int. Cl.: A46B 15/00, A61C 17/22

(54) **A TOOTHBRUSH WHICH PROVIDES BRUSHING COACHING**

(71) Applicant: Koninklijke Philips N.V., 5656 AG Eindhoven (NL)
(72) Inventor: YUAN, Zhaorui, Eindhoven (NL); VAN LEEUWEN, Marinus Bastiaan, Eindhoven (NL); VLUTTERS, Ruud, 5656AG Eindhoven (NL)
(74) Representative: Philips Intellectual Property & Standards

(57) **Abstract**

A toothbrush has a toothbrush head and a motion sensor integrated into the toothbrush for tracking a location of the toothbrush head. Brushing instructions are provided to a user while they perform tooth brushing, and the instructions are to follow a template brushing routine, which may be a real brushing routine being followed by another person or a virtual brushing routine. Brushing instructions are provided in real time for improving the correspondence between a current location in the template brushing routine and a current tracked location.

## Description

### FIELD OF THE INVENTION

This invention relates to toothbrushes, and in particular toothbrushes which provide brushing coaching.

### BACKGROUND OF THE INVENTION

Tooth brushing is a daily routine people are engaged with from a very young age, but often they have no idea on the effectiveness of their brushing technique or how to improve it. Furthermore, small children often need their parents to brush their teeth for them, which is an activity easily lasting for years.

It is known to incorporate location sensing into a toothbrush so that movements during a tooth brushing session can be stored. For example, it is known to monitor and track the location of the toothbrush during a brushing session, so that an analysis can be performed at the end of the complete session. With post-session analysis, an app associated with the toothbrush can advise where the user has been brushing. This information can be used to learn better brushing behavior.

However, it is difficult to learn from this post-session analysis and remember the required changes for the next brushing session. Thus, there remains a need to provide brushing coaching in real-time during a brushing session.

### SUMMARY OF THE INVENTION

The invention is defined by the claims.

According to examples in accordance with an aspect of the invention, there is provided a toothbrush, comprising:
a toothbrush head;
a motion sensor integrated into the toothbrush for tracking a location of the toothbrush head;
an output interface for providing brushing instructions to a user while they perform tooth brushing; and
a controller,
wherein the controller is configured to:
   receive a template brushing routine which comprises a real brushing routine being followed by another person or a virtual brushing routine;
   track a location of the toothbrush over time sensed by the motion sensor during a user toothbrush routine;
   analyze a correspondence between a current location in the template brushing routine and the current tracked location; and
   control the output interface to provide brushing instructions in real time for improving the correspondence between the current location in the template brushing routine and the current tracked location.

This toothbrush guides a user to follow a desired tooth brushing routine by tracking their toothbrush movement and comparing this with the desired routine (the "template brushing routine"). The toothbrush may be used as a training aid e.g. for children or to assist users e.g. adults in performing the most optimum brushing routine. Real-time feedback is provided to guide brushing movements, and brushing results can be evaluated after each session. Thus, adults may receive guidance from personalized virtual sessions, and children may be guided by human teachers such as their parents.

The template brushing routine may be a real brushing routine followed at the same time by a person who is coaching the user of the toothbrush, or it may be a simulated i.e. virtual brushing routine, by which is meant a brushing routine which is defined by stored data.

The output interface for example comprises an output device mounted at the toothbrush for generating output lights, sounds or vibrations by the toothbrush. Thus, real-time guidance is provided on the toothbrush itself.

The output interface for example (instead or additionally) comprises a communications system for communicating with an external output device. The external device, for example a smartphone or tablet, may have a richer user interface to enable more in-depth information to be provided to the user.

The controller interprets the motion sensor information to derive location information as well as comparing the locations followed during brushing with the template brushing routine.

The brushing instructions may comprise instructions to move the toothbrush from one mouth segment to a next mouth segment. Thus, when the template brushing routine moves to a new segment in the mouth, the toothbrush gives the user a hint in real-time to move to the same segment. Hints can also be triggered if differences are observed between in-segment motion style (e.g., too passive, too aggressive, too high/low pressure, too much/little scrubbing, etcetera).

The brushing instructions for example indicate left/right/up/down movements with different tones or words.

The brushing instructions may comprise instructions to adapt a brushing style. This may relate to a pressure to be applied, a motion speed, a stroke length, etc.

The template brushing routine may have different toothbrush settings for different locations, and the controller is configured to adapt automatically the toothbrush settings during the user toothbrush routine. Different power settings may thus be automatically set for different parts of the brushing routine.

In one set of examples, the template brushing routine comprises a personalized brushing plan for the user. A personalized brushing plan for example defines the bushing locations over time. The brushing locations can for example be based on a well-known 6 segments definition of the oral cavity. However, the resolution can also be refined to a single tooth.

The personalized brushing plan can be updated over time, for example by a dentist based on oral examination of the user. It can also be updated automatically based on sensed oral health conditions.

The template brushing routine for example includes brushing locations and times at each brushing location. It may also include toothbrush settings at different locations. Brushing metrics may thus be applied to each brushing location, such as the brushing time, the settings of the toothbrush, brushing style (the type of movement and brushing angle).

One user may have multiple brushing plans. Dentist feedback can be incorporated in the plan. The template brushing routine may be implemented in software running on the toothbrush, or it may be received from an external source such as in the cloud, on a PC or mobile phone, or on an intelligent charging device.

The template brushing routine may be based on general rules for efficient brushing as well as personal oral information such as the number of teeth, the presence of braces, tooth sensitivity information, plague development information, receded gum information etc.

In another set of examples, the template brushing routine comprises a coaching brushing routine followed by another person using another toothbrush while the user performs their brushing routine, wherein:
the toothbrush comprises a wireless receiver for receiving data communicated wirelessly from another toothbrush;
the controller is configured to receive the template brushing routine received by the wireless receiver in real-time from said another toothbrush.

In this case, one user (e.g. a parent) performs a tooth brushing routine to be followed by the user (e.g. a child). The two toothbrushes are connected to allow communication.

The "another toothbrush" (e.g. the one of a parent) functions as a teacher, and the teacher demonstrates good brushing behavior. The toothbrush of the user is the toothbrush of the child, and functions as the student.

In all use cases, the controller may be configured to generate an evaluation of the similarity between a completed brushing routine and the template brushing routine. A score may for example be generated on how similar the two brushing sessions are, to evaluate the coaching effects. The score can be given either on the toothbrush or an offline evaluation program (e.g., in an app, or via online account). The differences can also be turned into advice on how to improve the brushing routine (to reduce the differences).

The invention also provides a tooth brushing system comprising:
a first toothbrush, comprising the toothbrush defined above (to be used as child toothbrush); and
a second toothbrush, wherein the second toothbrush comprises:
   a toothbrush head;
   a motion sensor;
   a transmitter for transmitting data to the first toothbrush relating to a tooth brushing routine performed using the second toothbrush, to function as the template brushing routine of the first toothbrush.

The invention also provides a method of providing brushing instructions to a user of a toothbrush, comprising:
receiving a template brushing routine which comprises a real brushing routine being followed by another person or a virtual brushing routine;
tracking a location of the toothbrush over time sensed by using the motion sensor during a user toothbrush routine;
analyzing a correspondence between a current location in the template brushing routine and the current tracked location; and
providing brushing instructions for improving the correspondence between the current location in the template brushing routine and the current tracked location.

The template brushing routine for example comprises a coaching brushing routine followed by another person using another toothbrush while the user performs their brushing routine, wherein the method comprising receiving the template brushing routine in real-time from said another toothbrush.

The invention also provides a computer program comprising computer program code means which is adapted, when said program is run on a controller of a toothbrush, to implement the method defined above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a first example of a toothbrush in accordance with the invention;
Figure 2 shows a second example of a toothbrush in accordance with the invention, including a second toothbrush functioning as a teacher;
Figure 3 shows the workflow for the virtual brushing routine of Figure 1; and
Figure 4 shows the workflow for the real brushing routine of Figure 2.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a toothbrush which has a toothbrush head and a motion sensor integrated into the toothbrush for tracking a location of the toothbrush head. Brushing instructions are provided to a user while they perform tooth brushing, and the instructions are to follow a template brushing routine, which may be a real brushing routine being followed by another person or a virtual brushing routine. Brushing instructions are provided in real time for improving the correspondence between a current location in the template brushing routine and a current tracked location.

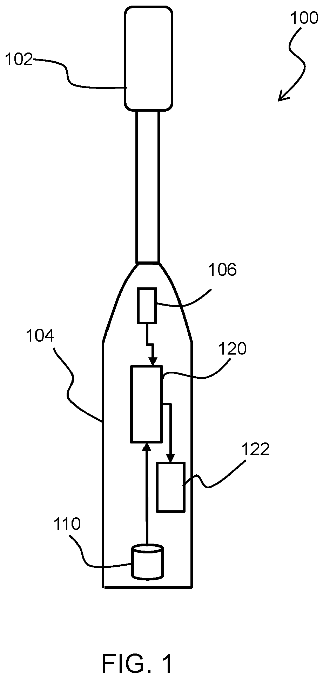

Figure 1 shows a first example of a toothbrush in accordance with the invention, in particular for use by an adult. There is a single toothbrush, taking the role of a student toothbrush coached by a brushing template.

The toothbrush 100 comprises a toothbrush head 102 and a handle 104. A motion sensor 106 is integrated into the toothbrush for tracking a location of the toothbrush head 102. The motion sensor may be in the handle (as shown) or it may equally be in the head . The motion sensor detects movements rather than absolute locations so it can be located anywhere on the toothbrush. The head is typically disposable, so it is preferred to locate reusable parts, such as sensors, in the handle. The motion sensor 106 is for example an inertia monitoring unit, IMU, which may incorporate a 3-axis accelerometer and a 3-axis gyroscope.

The motion sensor, together with a processing algorithm implemented by the controller, enables real-time localization of the toothbrush. The processing for example derives or makes use of a starting location, in order to provide information about the location of the toothbrush in the mouth. Such a function is already implemented in existing commercially available powered toothbrushes and will not be described in further detail.

An output interface 122 provides brushing instructions to a user while they perform tooth brushing. The output interface may be located on the handle, such as a display panel, LED lights, or a set of icons which are illuminated, and/or there may be an audible output using a speaker or a tactile output using a vibration generator. A speaker may be provided at the handle, to indicate left/right/up/down movement directions with different tones/words. Feedback can be given directly from the toothbrush, to free users from the interaction with an app, or if (part of the) processing is performed remotely in an app or in an external unit, then feedback can also come from the app or external unit.

The output interface may instead or additionally comprise a wireless transmitter for transmitting output data to a remote device which functions as a user interface, such as a smart phone, tablet or charging station.

A controller 120 receives a template brushing routine 110 which in this first example comprises a virtual brushing routine for the particular user.

The toothbrush is a powered toothbrush, with a motor in the handle (not shown) which is also controlled by the controller 120, for example with different brushing modes (e.g. different frequencies of vibration or speeds of rotation of the brushing head).

The controller 120 tracks a location of the toothbrush over time sensed by the motion sensor 106 during a user tooth brushing routine, so that a correspondence can be determined between a current location in the template brushing routine and the current tracked location. The output interface 122 is thus controlled in real time to provide brushing instructions for improving the correspondence between the current location in the template brushing routine and the current tracked location.

The controller in this first example thus makes use of a virtual brushing session, where the virtual brushing session demonstrates good, personalized brushing behavior.

The user of the toothbrush may be considered to be a student who is stimulated to follow the (virtual) movement corresponding to the personalized template brushing routine. The personalized template brushing routine ensures good brushing behavior. It is for example generated from three kinds of inputs:
(i) General rules for efficient brushing. Current recommendations from the American Dental Association encourage brushing for two minutes, twice per day. Unfortunately, many people don't spend nearly enough time on brushing their teeth. Combining this rule with the well-known 6 segments definition of oral cavity, the time spent on each segment is on average 20 seconds.
(ii) Personal tooth condition, such as:
   the number of teeth (e.g. a segment with very few teeth requires less brushing time);
   wearing braces or not (braces imply less pressure, slower movements, longer brushing time);
   (temporary) tooth sensitivity/pain at certain locations (implies less pressure, slower movements, shorter brushing time).
(iii) Dentist feedback, such as:
   plague development noticed at specific locations inside the mouth. This might give rise to advice for longer brushing time related to this location, and possibly increased brushing pressure;
   receding gum noticed at specific locations inside the mouth. This might give rise to advice for shorter brushing times related to this location and/or less brushing pressure.

Based on these inputs, one or more personalized brushing plans can be generated by a computer program or by manual analysis.

The template brushing routine includes the following elements:
(i) Brushing location. The brushing location can be based on the well-known 6 segments definition of the oral cavity. However, it is not limited to this approach. The resolution can also be refined to known 12 segment or 16 segment definitions, or indeed to a single tooth;
(ii) Several brushing configuration/metrics may be applied to each brush location, such as:
   the brushing time;
   settings of the toothbrush, i.e. parameters to configure the toothbrush movements, such as pressure, cleaning mode (examples for the Philips Sonicare+ toothbrush include Clean, White+, Gum Health, Deep Clean+), and brush head type;
   the brushing style: i.e. how someone moves/scrubs the toothbrush, and under what angle the brush touches the teeth/gum line (how close to the so-called 45 degree bass angle);
(iii) Brushing order. Optionally, the brushing order can also be included, to guide a user moving from one location to another in defined orders.

The resulting virtual session can be personalized and updated, depending on personal tooth conditions and other dentist feedback. The virtual brushing session may for example indicate that one segment requires a longer brushing time, and with gentle movements, due to receding gums.

This brushing template may be considered to provide brushing instructions of a virtual teacher. Suppose the teacher and student start brushing from the same location. When the (virtual) teacher toothbrush moves to another segment in the mouth, the student brush delivers a hint in real-time to move to the same segment. Hints can also be triggered if differences are observed between in-segment motion styles (e.g., too passive, too aggressive, too high/low pressure, too much/little scrubbing, etc.).

The feedback functions as real-time coaching, encouraging the user to follow the teacher brushing behavior. The coaching assists the user in following movements of the teacher session.

The template may include different toothbrush settings for different brushing locations. These settings changes may be adapted automatically or the user may be given instructions to make setting adjustments.

Eventually, as a reward, the user may be provided with a score indicating how similar the two brushing sessions are, to evaluate the coaching effects. The score can be given either on the toothbrush or by an offline evaluation program (e.g., in an app, or via an online account). The differences can also be turned into advice on how to improve the brushing routine (and thereby reduce the differences).

The template brushing routine may be a personalized ideal brushing plan, including the brushing location, brushing time at each location, and optimal toothbrush settings to be applied for each location. One person can have multiple (ideal) brushing plans, and dentist feedback can be incorporated into such a plan.

The template brushing routine, i.e. the personalized virtual brushing plan, is implemented in software which may run on the toothbrush itself or optionally it may run outside the toothbrush, such as in the cloud, on a PC or mobile phone, or on an intelligent charging device. In case of implementation outside the toothbrush, connectivity from the toothbrush to such external devices is required, such as Bluetooth, WIFI, 5G, etc.

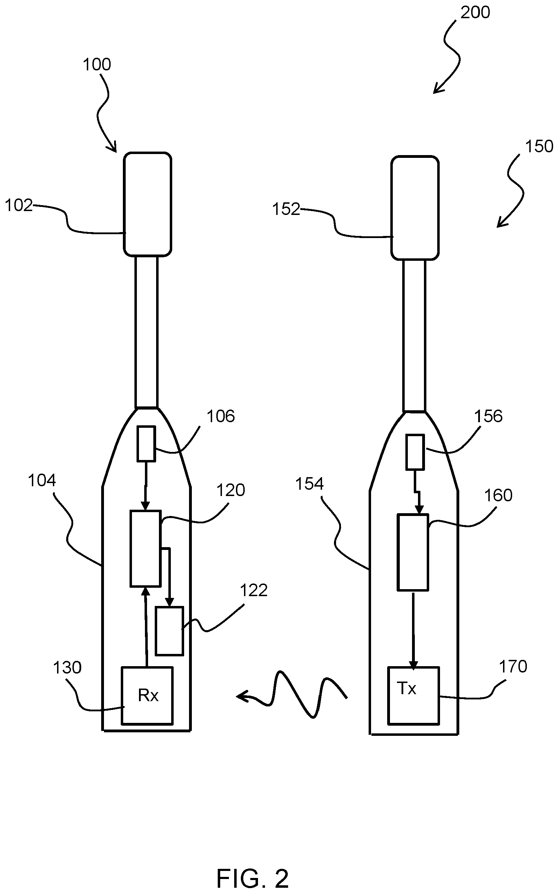

Figure 2 shows a second example of a toothbrush in accordance with the invention, in particular for use by a child. The overall system 200 now has two toothbrushes. The child toothbrush 100 is the same as that shown in Figure 1 and functions as the student toothbrush, but instead of a software based template brushing routine 110, the toothbrush has a receiver 130 for receiving movements generated by a real brushing routine from another toothbrush 150 while the user (child) performs their brushing routine. The other toothbrush 150 is used by a parent (or other carer) and it is used to perform a coaching brushing routine, and it functions as a teacher toothbrush. Thus, Figure 1 uses a virtual teacher and Figure 2 uses a real teacher.

The template brushing routine is received by the wireless receiver 130 in real-time from the other toothbrush 150. The wireless receiver is for example part of a transceiver allowing two-way communication. For example, a handshake protocol may be used for synchronization at start-up.

The other toothbrush 150 comprises a toothbrush head 152 and a handle 154. A motion sensor 156 is integrated into the toothbrush for tracking a location of the toothbrush head 152. The motion sensor is again shown in the handle, but it may instead be in the head. The motion sensor 156 is again for example an inertia monitoring unit, IMU.

The other toothbrush has a controller 160 and a wireless transmitter 170 for communicating with the child toothbrush 100. The wireless transmitter is for example part of a transceiver allowing two-way communication. As mentioned above, a handshake protocol may be used for synchronization at start-up.

The toothbrush is again a powered toothbrush, with a motor in the handle (not shown) which is also controlled by the controller 160. The controller 160 tracks a location of the toothbrush 150 over time sensed by the motion sensor 156 during a user toothbrush routine, and this then becomes the template brushing routine. The controller 120 in the child toothbrush determines a correspondence between a current location in the template brushing routine and the current tracked location. The output interface 122 is then controlled in real time to provide brushing instructions for improving the correspondence between the current location in the template brushing routine and the current tracked location in the same way as the system of Figure 1.

The adult uses their toothbrush 150 to demonstrate good brushing behavior.

The two toothbrushes are connected wirelessly (either directly via Bluetooth, WIFI, 5G, etc., or indirectly via a cloud server or external unit).

In both use cases (of Figure 1 and Figure 2), monitoring the location difference between the current brushing routine and the template brushing routine, the user toothbrush can provide the following feedback:
(i) Basic feedback on whether the current locations are the same, which stimulates the student to check by himself or herself on how to get better synchronized with the teacher.
(ii) Optional advanced feedback providing, if the current locations are not the same (e.g. different segments), advice for the student about the direction to move to in order to get to the same segment.
(iii) Optional advanced feedback in the form of an indication of the moving speed or how much movement is needed for the student to catch up with the teacher location.
(iv) Optional advanced feedback about the in-segment motion style (e.g. use a slow sliding/scrubbing motion instead of high frequent jittering motion, apply more/less pressure, etc.).

The feedback can also be predictive, for example indicating that a transition from a current segment to the next segment is ahead. A predictive approach is simple to implement for the first example with a virtual teacher. A predictive function for the second example, with adult and child, may for example use a manual trigger given by the adult (pressing a button).

The more advanced feedback for example enables the student to follow their parent teacher even without looking at how she/he brushes.

As mentioned above, the feedback stimulus can be given directly on the device, without interacting with an app. Real-time feedback on the toothbrush may for example use an LED ring to indicate the progress in the current location, and an indicator to move to the next location via audio or vibration. Alternatively, the stimulus may be given via an external unit or an app. Besides the advantage of enabling advanced user feedback (e.g. video), another benefit is less computational power inside the toothbrush is required. The IMU data (raw or encoded), and/or the extract metrics (e.g. location) are streamed to the external unit (or an app) and further processed there.

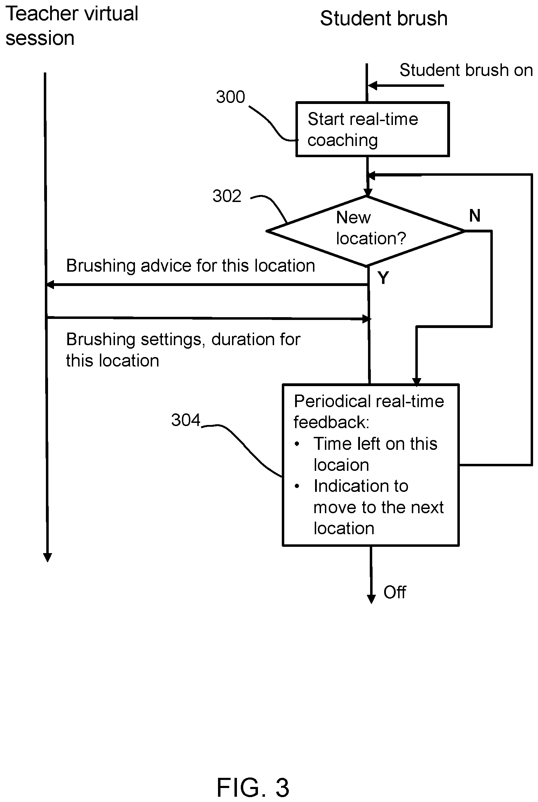

Figure 3 shows the workflow for the virtual brushing routine of Figure 1.

The student turns on the brush. The real-time coaching then starts in step 300.

On the student side, the toothbrush periodically checks whether a new brushing location is reached in step 302. If a new location is detected, the toothbrush consults the personalized teacher virtual session for brushing advice, i.e. the brushing settings, duration, style. The reply is obtained from the template brushing routine, and specifies the required brushing settings and duration. The brushing settings are automatically adjusted on the student side.

Real time feedback is given to the user regarding the current location in step 304. Information provided by such feedback includes the remaining time or the time covered (as a percentage) at this location, and a stimulus to move to the next location when appropriate. The real time feedback may also include advice about the technique, such as scrubbing or brush angle style.

There may be multiple template brushing routines for a user. The user is guided to follow one of them, and the system may therefore need to judge which template the user is most likely to be following.

The workflow is periodic so returns to step 302 repeatedly until the coaching session ends. This happens when the student turns the brush off.

The user for example subscribes to a virtual brushing plan, to enable access to brushing plans stored in computers or network systems. After the subscription, the user can download and update his/her personal brushing plan.

The brushing plan can also (automatically) be updated from the personal brushing history of a previous period, such as a number of previous days. For example:
(i) a personal (favorite) brushing route may be defined based on the brushing history;
(ii) advice may be generated about reducing scrubbing only on locations where scrubbing was detected most strongly in previous sessions;
(iii) the plan may be adopted gradually, to move from the current personal style to a more ideal style (for example to move from 15 seconds per segment to 20 seconds per segment).

When the function of following a virtual brushing plan is activated on a toothbrush for the first time, the user will need to connect the toothbrush to his/her virtual plan, either by downloading the plan to the toothbrush, or by linking the toothbrush ID with a plan stored outside the toothbrush. The toothbrush may already have a default virtual plan installed.

Optionally, a brushing route can be visualized with automatically generated videos or animations, for example, using an app, showing virtually how the toothbrush moves inside the mouth. This is done in real-time, while the user is brushing his/her teeth, to show how a good brushing session for him/her should look.

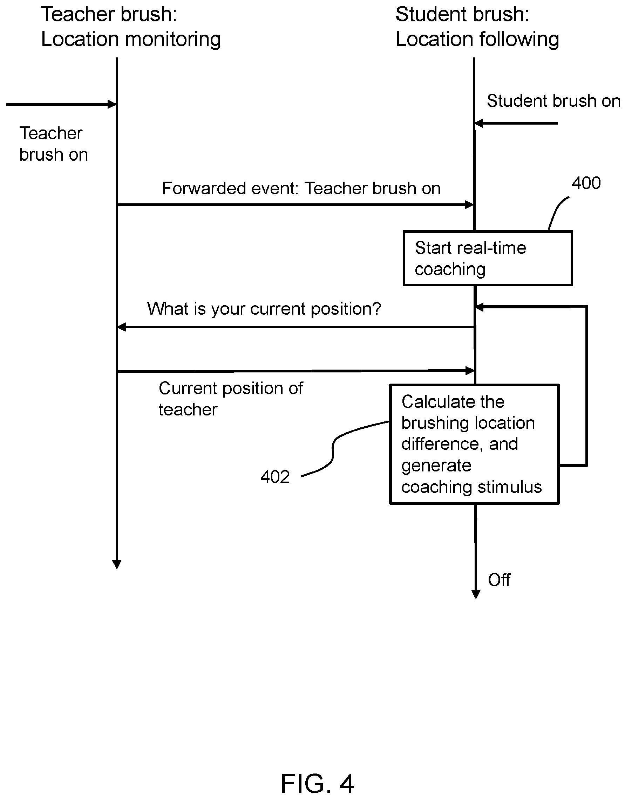

Figure 4 shows the workflow for the real brushing routine of Figure 2.

On both the teacher brush and the student brush, when the function of following a real toothbrush is activated for the first time, the user needs to register for the right role.

An initial alignment is needed between the student and the teacher. This can be done manually, e.g., the teacher helps the student to move to the correct starting brushing position for both.

The two toothbrushes are then turned on. Either of the student and teacher can be the first one to set the toothbrush on. The real-time coaching function waits for both brushes to be on, to start real-time coaching.

To speed up the process, the toothbrush lagging behind (i.e., not on yet), may provide a stimulus (e.g., blinking LED). Since the two toothbrushes are paired, a light-weight background function can be used to monitor (e.g. by pulling whether the other toothbrush is on or not). This background function can run even when the toothbrush is functionally turned off (but not fully powered down). When it sees the other toothbrush is turned on, it sends a stimulus.

The coaching then starts in step 400. In repeated steps 402, real-time feedback is given as described above. In particular, the control unit 120 on the child toothbrush monitors the location difference and provides coaching, using the basic or advanced feedback features described above.

During the coaching, the student brush interrogates the teacher brush to learn its current location and the teacher responds with its current location.

On the student brush, it can be checked whether the student starts brushing from the same location as the teacher. If not, extra stimulus can be given (e.g., extra fast blinking LEDs). This can be done for example, in the first five seconds of a brushing session.

The coaching session ends when the teacher or student turns the brush off.

Optionally, the teacher brush can report periodically its brushing location to another device/cloud, where the rest of the monitoring function is implemented. Alternatively, the IMU data of the two brushes can be streamed to an external device/cloud for further processing. The communication between the toothbrushes can be based on direct toothbrush-to-toothbrush connection, via Wifi/Bluetooth/5G etc., or indirect connection via other devices or the cloud.

After each brushing session, the system may evaluate how well the student session follows the teacher session. For sessions following a real toothbrush, the evaluation can be based on calculating the similarity between the teacher session and the student session. For student sessions with virtual sessions, the evaluation can be based on calculating the similarity between the virtual session and the student session.

In both cases, the brushing session can be evaluated by calculating metrics for each brushing location. For each metric, a cross correlation can be calculated between the user brushing session and the real or virtual teacher brushing session. A score can then be a weighted sum of the cross correlation values for various metrics. The evaluation results can be presented to the user via user feedback, either directly on the toothbrush, or via an offline program (e.g., an app).

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A toothbrush (100), comprising:
a toothbrush head (102);
a motion sensor (106) integrated into the toothbrush for tracking the location of the toothbrush head;
an output interface (122) for providing brushing instructions to a user while they perform tooth brushing; and
a controller (120),
wherein the controller is configured to:
receive a template brushing routine which comprises a real brushing routine being followed by another person or a virtual brushing routine;
track a location of the toothbrush over time sensed by the motion sensor during a user toothbrush routine;
analyze a correspondence between a current location in the template brushing routine and the current tracked location; and
control the output interface to provide brushing instructions in real time for improving the correspondence between the current location in the template brushing routine and the current tracked location.

2. The toothbrush of claim 1, wherein the output interface comprises an output device mounted at the toothbrush for generating output lights, sounds or vibrations by the toothbrush.

3. The toothbrush of claim 1 or 2, wherein the output interface comprises a communications system for communicating with an external output device.

4. The toothbrush of any one of claims 1 to 3, wherein the brushing instructions comprise instructions to move the toothbrush from one mouth segment to a next mouth segment.

5. The toothbrush of claim 4, wherein the brushing instructions comprise instructions to adapt a brushing style.

6. The toothbrush of any one of claims 1 to 5, wherein the template brushing routine has different toothbrush settings for different locations, and the controller is configured to automatically adapt the toothbrush settings during the user toothbrush routine.

7. The toothbrush of any one of claims 1 to 6, wherein the template brushing routine comprises a virtual brushing routine which is a personalized brushing plan for the user.

8. The toothbrush of claim 7, wherein the template brushing routine includes brushing locations and times at each brushing location.

9. The toothbrush of claim 7 or 8, wherein the template brushing routine includes toothbrush settings at different locations.

10. The toothbrush of any one of claims 1 to 5, wherein the template brushing routine comprises a real brushing routine comprising a coaching brushing routine followed by another person using another toothbrush while the user performs their brushing routine, wherein:
the toothbrush comprises a wireless receiver (1330) for receiving data communicated wirelessly from the other toothbrush;
the controller (120) is configured to receive the template brushing routine received by the wireless receiver in real-time from said another toothbrush.

11. The toothbrush of any one of claims 1 to 10, wherein the controller is configured to generate an evaluation of the similarity between a completed brushing routine and the template brushing routine.

12. A tooth brushing system (200) comprising:
a first toothbrush (100), comprising the toothbrush of claim 10; and
a second toothbrush (150), wherein the second toothbrush comprises:
a toothbrush head (152);
a motion sensor (156);
a transmitter (160) for transmitting data to the first toothbrush (100) relating to a tooth brushing routine performed using the second toothbrush (150), to function as the template brushing routine of the first toothbrush.

13. A method of providing brushing instructions to a user of a toothbrush, comprising:
receiving a template brushing routine which comprises a real brushing routine being followed by another person or a virtual brushing routine;
tracking a location of the toothbrush over time sensed by using the motion sensor during a user toothbrush routine;
analyzing a correspondence between a current location in the template brushing routine and the current tracked location; and
providing brushing instructions for improving the correspondence between the current location in the template brushing routine and the current tracked location.

14. The method of claim 13, wherein the template brushing routine comprises a coaching brushing routine followed by another person using another toothbrush while the user performs their brushing routine, wherein the method comprising receiving the template brushing routine in real-time from said another toothbrush.

15. A computer program comprising computer program code means which is adapted, when said program is run on a controller of a toothbrush, to implement the method of claim 13 or 14.
